(19) Europäisches Patentamt / European Patent Office / Office européen des brevets

(11) EP 4 679 661 A1

(12) EUROPÄISCHE PATENTANMELDUNG

(43) Veröffentlichungstag:
14.01.2026 Patentblatt 2026/03

(21) Anmeldenummer: 24188041.8

(22) Anmeldetag: 11.07.2024

(51) Internationale Patentklassifikation (IPC):
H02J 7/00 (2026.01)

(52) Gemeinsame Patentklassifikation (CPC):
H02J 7/0013; H02J 7/0018; H02J 7/0069

(84) Benannte Vertragsstaaten:
AL AT BE BG CH CY CZ DE DK EE ES FI FR GB GR HR HU IE IS IT LI LT LU LV MC ME MK MT NL NO PL PT RO RS SE SI SK SM TR
Benannte Erstreckungsstaaten:
BA
Benannte Validierungsstaaten:
GE KH MA MD TN

(71) Anmelder: Fabrimex X-Tec AG
8604 Volketswil (CH)

(72) Erfinder: HEIMGARNTER, Remo
8132 Egg (CH)

(74) Vertreter: Troesch Scheidegger Werner AG
Schwäntenmos 14
8126 Zumikon (CH)

(54) **VORRICHTUNG ZUM LADEN EINER REIHENSCHALTUNG VON AKKUMULATOREN UND SPEICHERVORRICHTUNG, DIE MINDESTENS EINE SOLCHE VORRICHTUNG UND EINE REIHENSCHALTUNG VON AKKUMULATOREN UMFASST, SOWIE ENTSPRECHENDES VERFAHREN**

(57) Vorrichtung (100) zum Laden von wiederaufladbaren Bleiakkumulatoren (10; 10.1, 10.2 ... 10.n), wobei die Bleiakkumulatoren (10) in Reihe geschaltet sind, und wobei die Vorrichtung (100) umfasst:
• eine Vorrichtung (21) mit Lastanpassungsschaltungen, wobei die Lastanpassungsschaltungen separate Ladeströme (IL; IL1, IL2 ... IIn) bereitstellen, wobei jeder der Lastanpassungsschaltungen über eine elektrisch leitende Verbindung mit dem Pluspol (1) und über eine elektrisch leitende Verbindung mit dem Minuspol (2) einer der Bleiakkumulatoren (10; 10.1, 10.2 ... 10.n) so verbunden ist, dass jeder der Bleiakkumulatoren (10; 10.1, 10.2 ... 10.n) individuell mit einem der Ladeströme (IL; IL1, IL2 ... IIn) geladen werden kann,
• eine HF-Schaltung oder HF-Einspeisung, die ein hochfrequentes, periodisches Signal bereitstellt, das jedem der Ladeströme (IL; IL1, IL2 ... IIn) aufgeprägt wird, um jeden der Bleiakkumulatoren (10; 10.1, 10.2 ... 10.n) separat im Hochfrequenzbereich zu konditionieren.

Fig. 3

EP 4 679 661 A1

**Beschreibung**

Es geht um eine Vorrichtung und ein Verfahren zum Laden einer Reihenschaltung von Akkumulatoren und um eine Speichervorrichtung, die mindestens eine solche Vorrichtung und eine Reihenschaltung von Akkumulatoren umfasst.

In zahlreichen Bereichen kommen Bleiakkumulatoren ($PbO_2$-Akkumulatoren) zum Einsatz, da sie relativ preiswert und leistungsstark (mit beispielsweise bis zu 300 W/kg) sind. Außerdem haben sie einen guten Lade-Entlade-Wirkungsgrad, der bei ca. 80% liegt, und die Selbstentladung liegt unterhalb von 5% pro Monat.

Es ist bekannt, dass es während des Betriebs solcher Bleiakkumulatoren zu Problemen im Bereich der Elektroden kommen kann. Dort kann es z.B. zu Schlammbildung und/oder Gitterkorrosion in den Zellen kommen. Außerdem kann eine Gasbildung auftreten. Diese Gasbildung entsteht durch die elektrolytische Zersetzung des Wassers, das in der verdünnten Schwefelsäure (d.h. im Elektrolyt) enthalten ist. Dabei entstehen Sauerstoff und Wasserstoff, die zusammen Knallgas bilden.

Beim Entladen der Bleiakkumulatoren kann sich an beiden Elektroden kristallförmiges Bleisulfat bilden. Das kristallförmige Bleisulfat kann zu großen und harten Kristallen (auch grobkristalline Sulfatierung genannt) zusammenwachsen. Diese Form der Kristallbildung zeigt sich durch eine Verringerung der Kapazität der Bleiakkumulatoren. Eine geringe Menge von kristallförmigem Bleisulfat ist nicht weiter störend, da sich die Kristalle beim Laden der Bleiakkumulatoren (auf-)lösen. Die Bildung von großen und harten Kristallen hingegen ist sehr nachteilig. Es ist aus dem Stand der Technik bekannt, dass die Bildung von kristallförmigem Bleisulfat durch das gelegentliche Anlegen von Ladepulsen in Form starker Stromstösse vermieden oder mindestens reduziert werden kann. Es gibt z.B. Geräte, welche die Bildung von kristallförmigem Bleisulfat vermeiden sollen. Gängige Bezeichnungen für solche Geräte sind Batterie-Desulfatierer, -Aktivatoren oder -Pulser.

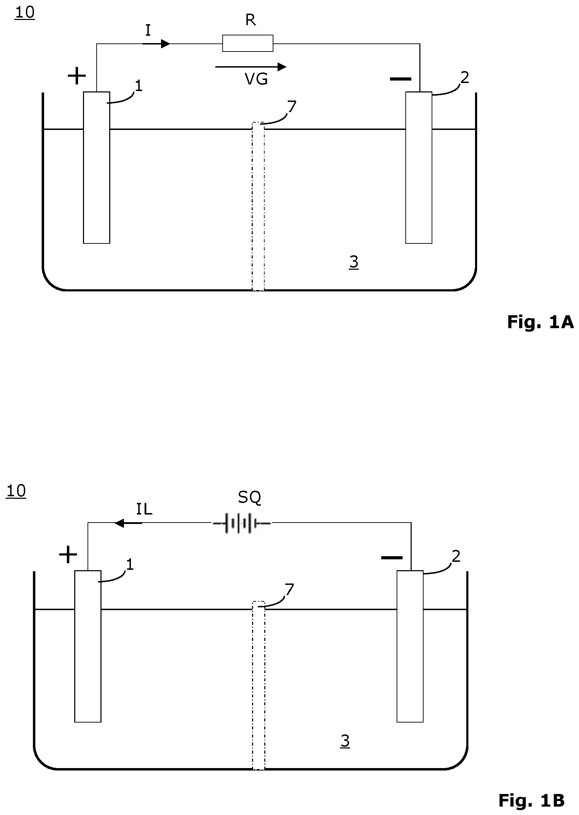

Fig. 1A zeigt beispielhaft das Schema eines Bleiakkumulators 10 beim Entladen. Die Elektrode 1, an der eine Oxidation abläuft, wird als Anode bezeichnet. Die Elektrode 2, an der die Reduktion abläuft, wird als Kathode bezeichnet. Beim Entladen finden unter anderem die folgenden Reaktionen statt. An der Anode 1 wird das Bleidioxid ($PbO_2$) der Anodenplatte 1 in Bleisulfat ($PbSO_4$) umgewandelt (durch Oxidation). An der Kathode 2 wird das Blei (Pb) dieser Elektrode in Bleisulfat ($PbSO_4$) umgewandelt (durch Reduktion). Das Blei der Kathode 2 liegt meist in Form von Bleischwamm vor. An beiden Elektroden 1, 2 entsteht beim Entladen 2-wertiges Blei.

Es kommen meist Platten oder Gitter als Elektroden zum Einsatz. Es befinden sich Separatoren 7 (z.B. in Vliesform) jeweils zwischen einer als positive Elektrode dienenden Platte und einer benachbarten Platte, die als negative Elektrode dient. In den Figuren 1A und 1B ist ein solcher Separator 7 in stark vereinfachter Form gezeigt.

Durch die Oxidations- und Reduktionsvorgänge an den Elektroden 1, 2 wird die Schwefelsäure ($H_2SO_4$), die als Elektrolyt 3 dient, verbraucht. Der Entladevorgang (Lastzustand) wird durch einen Strom I symbolisiert, der durch einen (Last-)Widerstand R fliesst.

Fig. 1B zeigt beispielhaft das Schema eines Bleiakkumulators 10 beim Laden. Der Ladevorgang wird durch einen Ladestrom IL symbolisiert, der durch eine Spannungsquelle SQ eingeprägt wird. Beim Ladevorgang laufen umgekehrte Reaktionen ab. Bleisulfat ($PbSO_4$) und Wasser werden unter Einsatz der externen Spannungsquelle SQ elektrochemisch zu Blei (Pb), Bleidioxid ($PbO_2$) und Schwefelsäure ($H_2SO_4$) umgesetzt. D.h., mit der Energie aus der Spannungsquelle SQ wird das Bleisulfat ($PbSO_4$) aufgespalten und mit dem Sauerstoff aus dem ionisierten Wasser wird an der Anode 1 Bleidioxid ($PbO_2$) abgelagert. Außerdem wird Blei (Pb) an der Kathode 2 abgelagert.

Die grundlegende elektrochemische Reaktionsgleichung eines solchen Bleiakkumulators 10 kann vereinfacht wie folgt dargestellt werden (der Reaktionspfeil, der von links nach rechts zeigt, symbolisiert das Entladen. Der Reaktionspfeil, der von rechts nach links zeigt, symbolisiert das Laden):

$$Pb + 2\,H_2SO_4 + PbO_2 \;\longleftrightarrow\; PbSO_4 + 2H_2O + PbSO_4$$

Es stellt sich in Anbetracht der eingangs geschilderten Probleme die Aufgabe, eine Vorrichtung bereit zu stellen, die es ermöglicht eine Reihenschaltung von baugleichen Akkumulatoren zuverlässig und sicher zu laden, wobei gleichzeitig die Lebensdauer und Zuverlässigkeit der Akkumulatoren verbessert werden soll.

Gemäss Erfindung wird eine mehrkanalige (Lade-)Vorrichtung bereitgestellt wobei die Anzahl m der Kanäle vorzugsweise der Anzahl n der zu ladenden Bleiakkumulatoren entspricht (m und n sind ganze Zahlen größer gleich 2).

Die vorliegende Erfindung ist primär auf Bleiakkumulatoren anwendbar. Die Vorrichtung umfasst vorzugsweise bei allen Ausführungsformen baugleiche Bleiakkumulatoren, wobei der Begriff «baugleich» verwendet wird, um zum Ausdruck zu bringen, dass es sich um Bleiakkumulatoren mit gleicher Kapazität, respektive vom gleichen Typ handelt.

Die Vorrichtung ist bei allen Ausführungsformen zum Laden und Konditionieren baugleicher Bleiakkumulatoren ausgelegt, wobei jeder der Bleiakkumulatoren im Wesentlich dieselbe Nennspannung aufweisen sollte und die Bleiakkumulatoren in Reihe geschaltet sind.

Es geht hier auch um eine Speichervorrichtung, die sowohl ein Vorrichtung zum Laden und Konditionieren als auch eine Reihenschaltung von baugleichen Bleiakkumulatoren umfasst.

Es geht hier auch um ein Verfahren zum zeitgleichen Laden von n wiederaufladbaren Bleiakkumulatoren, wobei

- n eine ganze Zahl größer gleich 2 ist,
- die n Bleiakkumulatoren in Reihe geschaltet sind, und
- jeder der n Bleiakkumulatoren eine identische Anzahl von elektrochemischen Akkuzellen umfasst,

umfassend die Schritte:

- Bereitstellen von n separaten Ladeströme so, dass jeder der n Bleiakkumulatoren individuell mit einem der n separaten Ladeströme geladen wird,
- Bereitstellen eines hochfrequenten, periodischen Signals,
- Aufprägen des hochfrequenten, periodischen Signals auf jeden der n separaten Ladeströme, um jeden der n Bleiakkumulatoren separat im Hochfrequenzbereich zu konditionieren, wobei das hochfrequente, periodische Signal eine Frequenz aufweist, die grösser ist als 3MHZ und kleiner als 10MHz, und wobei diese Frequenz (fl) vorzugsweise zwischen 3MHz und 4 MHz beträgt.

Die Vorrichtung umfasst vorzugsweise bei allen Ausführungsformen pro Kanal m eine Vorrichtung zur galvanischen Trennung, einen DC/DC-Wandler, um eine situativ angepassten Ladestrom-Gleichstrom bereit zu stellen und eine HF-Schaltung oder eine HF-Einspeisung, um dem Ladestrom-Gleichstrom ein hochfrequentes sinusförmiges Signal aufzuprägen.

Die Vorrichtung umfasst vorzugsweise bei allen Ausführungsformen pro Kanal m eine Vorrichtung zur galvanischen Trennung, einen DC/DC-Wandler, um einen situativ angepassten Ladestrom-Gleichstrom bereit zu stellen und sie umfasst zusätzlich eine zentrale HF-Schaltung oder eine zentrale HF-Einspeisung, um jedem der von den m Kanälen bereitgestellten Ladeströmen ein hochfrequentes sinusförmiges Signal aufzuprägen.

Mit den hier beschriebenen Massnahmen und Vorrichtungen können Bleiakkumulatoren zuverlässiger und sicherer betrieben werden. Ausserdem wird durch die beschriebenen Massnahmen und Vorrichtungen die Lebensdauer der Bleiakkumulatoren erhöht.

Mit den hier beschriebenen Massnahmen und Vorrichtungen können Bleiakkumulatoren einzeln (individuell angepasst) bis zur zulässigen Endspannung aufgeladen werden und gleichzeitig kann durch den HF-Anteil das Ansammeln oder der Aufbau von störenden Kristallen im Elektrolyt reduziert oder ganz verhindert werden. Besonders bevorzugt sind Ausführungsformen, bei denen die Frequenz des HF-Anteils zwischen 3 MHz und 4 MHz beträgt, um die Redox-Reaktion anzuregen, die in den Bleiakkumulatoren abläuft. Durch dieser Frequenzanregung der Redox-Reaktion wird möglichst alles Bleisulfat, das sich beim Entladen bildet, zurückgebildet. Somit wird das Ansammeln oder der Aufbau von störenden Bleisulfat-Kristallen im Elektrolyt reduziert oder ganz verhindert.

Mit den hier beschriebenen Massnahmen und Vorrichtungen können die Bleiakkumulatoren konditioniert und geschützt werden.

Die beschriebenen Massnahmen und Vorrichtungen können auf Bleiakkumulatoren mit flüssigem Elektrolyt 3 angewendet werden. Bei Bleiakkumulatoren mit Flüssigelektrolyt kann das Elektrolyt im Wesentlichen frei strömen. Bleiakkumulatoren mit Flüssigelektrolyt werden auch als offene Bleiakkumulatoren bezeichnet. Die Massnahmen und Vorrichtungen können aber auch auf Bleiakkumulatoren mit immobilisiertem Elektrolyt (z.B. als Elektrolyt-Gel) und auf Bleiakkumulatoren mit Glasfaservlies angewendet werden. Diese Typen werden auch als geschlossene Bleiakkumulatoren bezeichnet. Der positive Effekt, respektive die Wirkung des eingeprägten HF-Signals hat jedoch eine stärkere positive Auswirkung auf offene Bleiakkumulatoren. Das Konzept der Einzelaufladung bis zur zulässigen Endspannung ist aber bei beiden Akkutypen effektiv.

Bevorzugte Ausführungsformen sind den jeweiligen Unteransprüchen zu entnehmen.

Weitere Einzelheiten und Vorteile der Erfindung werden im Folgenden anhand von Ausführungsbeispielen und mit Bezug auf die Zeichnungen beschrieben.

| | |
|---|---|
| **Fig. 1A** | zeigt eine schematische Schnittansicht eines Akkumulators beim Entladen (Lastzustand); |
| **Fig. 1B** | zeigt eine schematische Schnittansicht des Akkumulators der Fig. 1A beim Aufladen (Ladezustand); |
| **Fig. 2** | zeigt schematisch ein Blockdiagramm einer ersten Vorrichtung der Erfindung, die zum Aufladen von n Akkumulatoren ausgelegt ist; |
| **Fig. 3** | zeigt schematisch ein Blockdiagramm einer zweiten Vorrichtung der Erfindung, die zum Aufladen von n Akkumulatoren ausgelegt ist; |
| **Fig. 4** | zeigt schematisch eine Teilvorrichtung der Fig. 2, wobei diese Teilvorrichtung m=n Lastanpassungsschal- |

tungen umfasst;

**Fig. 5A**  zeigt schematisch Details einer weiteren Vorrichtung der Erfindung, wobei hier nur die Elemente/Komponenten zum Aufladen eines Akkumulators dargestellt sind;

**Fig. 5B**  zeigt schematisch Details einer weiteren Vorrichtung der Erfindung, die als Abwandlung/Variante der Schaltung der Fig. 5A zu verstehen ist;

**Fig. 5C**  zeigt schematisch Details einer bevorzugten Vorrichtung der Erfindung, die als Abwandlung/Variante der Schaltung der Fig. 5B zu verstehen ist, wobei hier m=n=4 Kanäle zum Laden und Konditionieren von n=4 Akkumulatoren vorgesehen sind;

**Fig. 6**  zeigt schematisch Details einer weiteren Vorrichtung der Erfindung, wobei hier nur die Elemente/Komponenten zum Erzeugen/Bereitstellen eine HF-Signals dargestellt sind;

**Fig. 7**  zeigt schematisch Details einer weiteren Vorrichtung der Erfindung, wobei hier nur die Elemente/Komponenten zum Erzeugen/Bereitstellen eine HF-Signals und die Ausgänge/Anschlüsse zum Laden von n=4 Akkumulatoren dargestellt sind;

**Fig. 8A**  zeigt schematisch den Kurvenverlauf eines periodischen, sinusförmigen Signals;

**Fig. 8B**  zeigt schematisch den Kurvenverlauf eines Signals, das einen periodischen Anteil umfasst;

**Fig. 9**  zeigt schematisch und stark vereinfacht den Kurvenverlauf der Zellspannung VZ als Funktion der Zeit t und des Ladestromes IL eines Akkus als Funktion der Zeit t, wobei in einem lupenartigen Ausschnitt der hochfrequente Anteil des Ladestromes IL gezeigt ist.

Es wird hier der Begriff Vorrichtung 100 für eine Schaltkreisanordnung verwendet, die zum Laden und Konditionieren von n Bleiakkumulatoren 10 (mit n $\geq$ 2) ausgelegt ist. Diese Vorrichtung 100 umfasst m (parallele) Kanäle, wobei gilt: m $\geq$ 2. Vorzugsweise gilt m=n, d.h. es gibt pro Bleiakkumulator 10 einen Ladekanal.

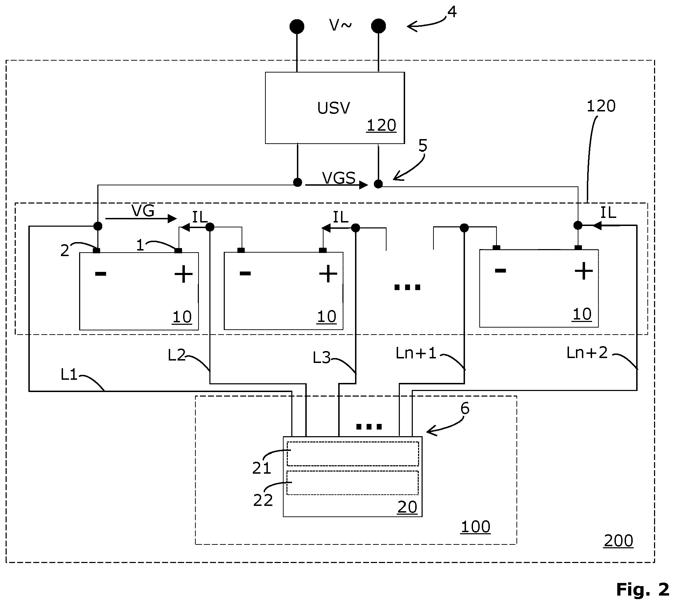

Jeder der n Bleiakkumulatoren 10, die hier eingesetzt werden, umfasst mindestens eine elektrochemische Zelle (auch Bleiakkumulator-Zelle genannt). Die Bleiakkumulator-Zellen sind mit einem Elektrolyt (meistens Schwefelsäure) befüllt und die Elektroden 1, 2 umfassen Blei bzw. Bleiverbindungen. Eine solche Bleiakkumulator-Zelle ist die kleinste Untereinheit oder Baugruppe eines Bleiakkumulators 10. Die Zellspannungen VZ (typischerweise 2V oder 2,2V) der einzelnen Bleiakkumulator-Zellen addiert sich zur Nennspannung VG (siehe Fig. 2). Wenn ein Bleiakkumulator 10 insgesamt 6 in Reihe geschaltete Zellen umfasst, dann ergibt sich eine Nennspannung (auch Nenngleichspannung genannt) von z.B. 12V (wie bei Autobatterien üblich). Es wird hier auch auf die Beschreibung der Figuren 1A, 1B verwiesen.

Es kommen meist Platten als Elektroden 1, 2 zum Einsatz, wobei ein Teil der Platten als positive Elektrode 1 und ein Teil der Platten als negative Elektrode 2 dienen. Es befinden sich Separatoren 7 (z.B. in Vliesform) jeweils zwischen einer als positive Elektrode 1 dienenden Platte und einer benachbarten Platte, die als negative Elektrode 2 dient (siehe die schematische Darstellung der Fig. 1A, 1B).

Als Material der Elektroden 1, 2 kommen z.B. Blei, Blei-Legierungen (z.B. Kalzium-Blei-Legierungen) zum Einsatz.

Um eine große Elektrodenoberfläche zu erzielen, kann als positive Elektrode 1 (Anode 1) bei allen Ausführungsformen ein Stapel aus Bleioxidblechen oder -rippen zum Einsatz kommen. Als negative Elektrode 2 (Kathode 2) kann bei allen Ausführungsformen ein Rahmen oder eine Matrix mit (schwammförmigem) Blei zum Einsatz kommen, wobei es sich besonders vorzugsweise um metallisches, sehr reines Blei handelt.

Vorzugsweise kommen bei allen Ausführungsformen Bleiakkumulatoren 10 zum Einsatz, die Bleidioxid (PbOz) im Form von Blei(IV)-oxid umfassen.

Vorzugsweise kommen bei allen Ausführungsformen verdünnte Schwefelsäure als Elektrolyt zum Einsatz, wobei die Konzentration der Schwefelsäure oberhalb von 35% liegt.

Bei der Serienschaltung (auch Reihenschaltung genannt) der Bleiakkumulatoren 10, addieren sich die Nennspannungen VG der einzelnen Akkus 10 zur Gesamtspannung VGS. Bei dem Beispiel der Fig. 2 gilt dann n*VG=VGS.

In Fig. 2 ist eine erste beispielhafte Speichervorrichtung 200 gezeigt, die alle wesentlichen Elemente der hier beschriebenen Erfindung umfasst. Es kommt eine Vorrichtung 100 zum Einsatz, die zum Laden und Konditionieren von n baugleichen Bleiakkumulatoren 10 ausgelegt, wobei jeder der baugleichen Bleiakkumulatoren 10 durch ein vereinfachtes Akkusymbol mit Pluspol 1 und Minuspol 2 dargestellt ist. Bei dem in Fig. 2 gezeigten Beispiel umfasst die Vorrichtung 100 n $\geq$ 3 Bleiakkumulatoren 10.

Als Speichervorrichtung 200 wird hier eine Anordnung bezeichnet, die eine Serienschaltung 120 von n baugleichen Bleiakkumulatoren 10 und eine Vorrichtung 100 umfasst, wobei die Vorrichtung 100 zum Laden und Konditionieren der n baugleichen Bleiakkumulatoren 10 ausgelegt ist. Eine solche Speichervorrichtung 200 kann weitere Elemente/Komponenten umfassen, die in Fig. 2 als USV-Schaltung 120 dargestellt sind. USV steht für unterbrechungsfreie Strom- oder Spannungsversorgung. Die USV-Schaltung 120 kann z.B. einen DC/AC-Wandler umfassen, der dazu ausgelegt ist die Gleichspannung VG in eine Wechselspannung V~ umzuwandeln.

Die erste beispielhafte Vorrichtung 200 ist hier als unterbrechungsfreie Spannungs- oder Stromversorgung ausgelegt, die in der Lage ist unterbrechungsfrei eine 230V-Wechselspannung (V~) als Ausgangsspannung zwischen zwei Kontakten 4 bereitzustellen. Zu diesem Zweck wird die Gesamtspannung VGS an die Eingangskontakte 5 des mit USV bezeichneten Blocks 120 angelegt. In den Figuren wird das Bezugszeichen V~ auch als Wechselspannung betrachtet, die von einem Versorgungsnetz bereitgestellt wird.

Die erste beispielhafte Vorrichtung 100 umfasst weiterhin eine Teilvorrichtung 20, die in Fig. 2 schematisch durch einen separaten Block dargestellt ist. Die Teilvorrichtung 20 umfasst eine Reihe von Kontakten 6 (hier auch als Kontaktleiste oder Kontaktseite bezeichnet). Die Bleiakkumulatoren 10 sind, wie schematisch angedeutet, mit der Reihe von Kontakten 6 verbunden.

Zwei benachbarte Bleiakkumulatoren 10 können sich jeweils eine leitende Lade-Verbindung zur Teilvorrichtung 20 teilen, wie in Fig. 2 gezeigt. Im gezeigten Beispiel teilen sich z.B. der erste Bleiakkumulator 10 (ganz links) und der zweite Bleiakkumulator 10 (zweiter von links) die Lade-Verbindung L2. Bei n=3 Bleiakkumulatoren 10 gibt es somit mindestens n+2=5 Lade-Verbindungen L1 bis Ln+2. Würde man hier einen vierten Bleiakkumulator 10 hinzufügen, so wären hier n+3=6 Lade-Verbindungen erforderlich. Die Lade-Verbindungen werden im Folgenden verkürzt als Verbindungen bezeichnet.

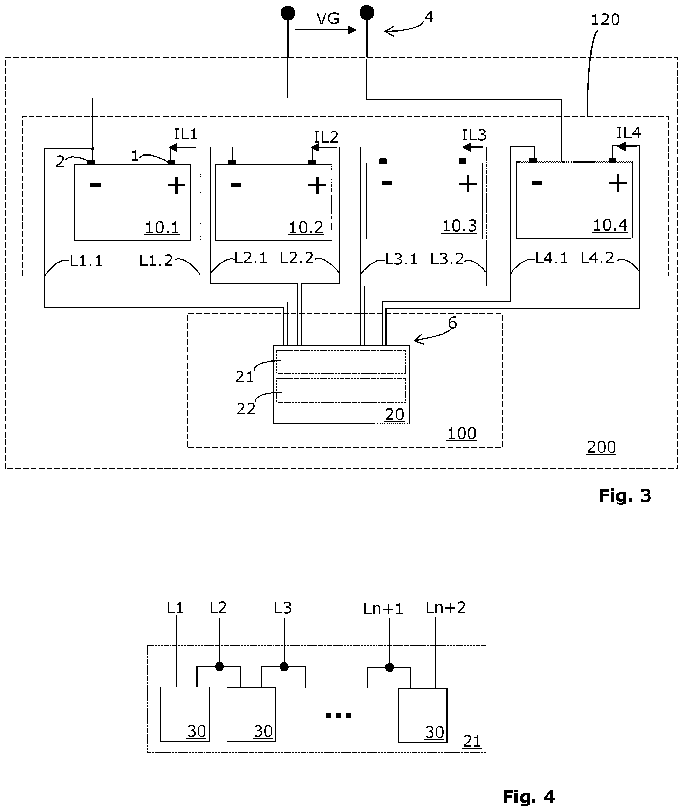

Da es hier um das Einprägen eines HF-Signals geht, das jedem der einzelnen Bleiakkumulator 10 zum Zwecke der Konditionierung zugeführt werden soll, werden Vorrichtungen bevorzugt, bei denen pro Bleiakkumulator 10 je zwei separate Verbindungen vorhanden sind. Daher ist in Fig. 3 eine zweite beispielhafte Vorrichtung 100 gezeigt, die n Bleiakkumulatoren 10 und 2*n Verbindungen aufweist. Die Leitungspaare L1.1, L1.2 sind dem ersten Akku 10 (ganz links) zugeordnet. Die Leitungspaare L2.1, L2.2 sind dem zweiten Akku 10 (zweiter von links), die Leitungspaare L3.1, L3.2 sind dem dritten Akku 10 (dritter von links) und die Leitungspaare L4.1, L4.2 sind dem vierten Akku 10 (ganz rechts) zugeordnet.

Bei dieser Konstellation und bei allen anderen Konstellationen, bei denen die Bedingung erfüllt ist, dass es zu den n Bleiakkumulatoren 10 je zwei separate Lade-Verbindungen gibt, kann jedem Lade-Verbindungspaar (und somit jedem Bleiakkumulator 10) je ein HF-Signal und ein individueller Ladestrom zugeführt werden. In Fig. 3 sind diese individuellen Ladeströme mit IL1 bis IL4 bezeichnet.

Durch die Leitungspaare L1.1, L1.2 bis L4.1, L4.2 hindurch können die Bleiakkumulatoren 10 individuell (jeweils situativ angepasst) mit Ladeströmen IL1 bis IL4 aufgeladen werden. Dabei ist zu beachten, dass sich die Ladeströme IL von Bleiakkumulator zu Bleiakkumulator geringfügig unterscheiden können und/oder dass die Ladeströme IL bei jedem der n Bleiakkumulatoren 10 einen etwas anderen zeitlich Verlauf nehmen können.

Vorzugsweise umfasst die Teilvorrichtung 20 bei allen Ausführungsformen einen Block 21 mit m Lastanpassungsschaltungen 30, wobei m eine ganze Zahl größer gleich 2 ist. Vorzugsweise gilt bei allen Ausführungsformen n=m.

Ergänzend zu Fig. 2 und Fig. 3 ist in Fig. 4 ein Block 21 mit m=n Lastanpassungsschaltungen 30 gezeigt. Da bei der Vorrichtung 100 der Fig. 2 jeweils ein Teil der Lade-Leitungen (hier L2, L3, ..., Ln+1) zusammengefasst wurden, weist auch der Block 21 entsprechend zusammengefasste Ausgangsleitungen auf (hier entsprechend L2, L3, ..., Ln+1). Falls der Block 21 zum Laden einer Konstellation nach Fig. 3 verwendet werden soll, so weist jede Lastanpassungsschaltung 30 je zwei individuelle Ausgangsleitungen als Lade-Leitungen (Lade-Verbindungen) auf. Bei n=4 Bleiakkumulatoren 10, die in Reihe geschaltet sind (siehe Fig. 3), sind 2*4 Lade-Leitungen vorhanden, wie bereits beschreiben. Entsprechend hat auch jede der Lastanpassungsschaltung 30 zwei individuelle Ausgangsleitungen.

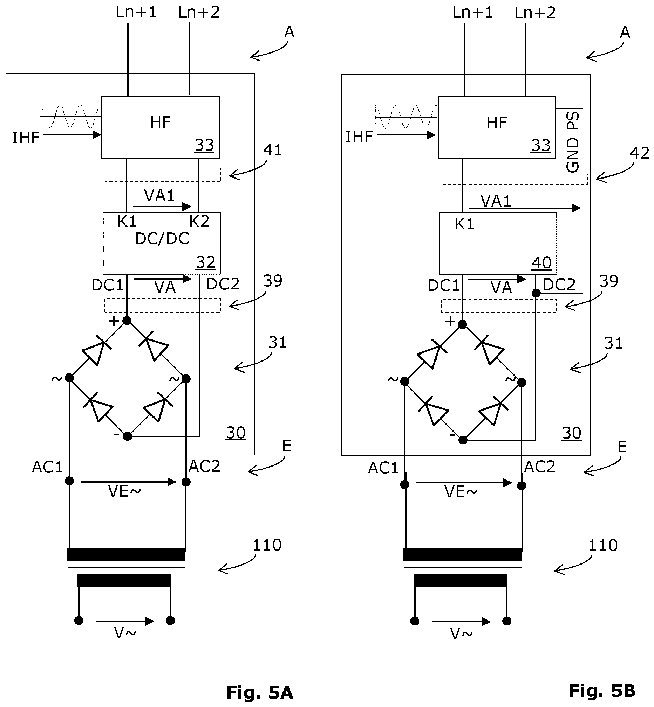

Jeder der Lastanpassungsschaltungen 30 umfasst bei allen Ausführungsformen vorzugsweise eine Ladeschaltung, die z.B. wie folgt aufgebaut sein kann. Es wird hier beispielhaft auf Fig. 5A oder Fig. 5B Bezug genommen, die je eine der m Lastanpassungsschaltungen 30 zeigen.

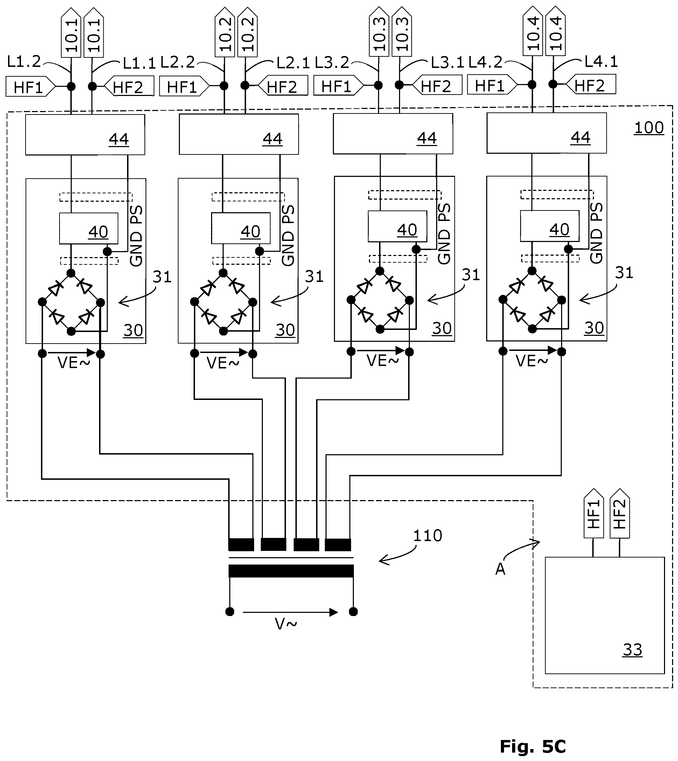

Jede der Schaltungen 30 weist eine Eingangsseite E und eine Ausgangsseite A auf. Jede Schaltung 30 kann im Bereich der Eingangsseite E einen 4-Wege-Gleichrichter 31 (auch Brückengleichrichter genannt) umfassen. Kunden- oder anwenderseitig wird die Eingangsseite E der Schaltung 30 beispielsweise mit einem Transformator 110 (z.B. ein Mehrabgangstransformator der Fig. 5C) verbunden, der eine oder mehrere geeignete Wechselspannung(en) als Eingangsspannung VE~ an den Gleichrichter 31 anlegt. Ausgangsseitig ist am Gleichrichter 31 der Fig. 5A ein DC/DC-Wandler 32 vorgesehen, der primär dazu ausgelegt ist Gleichspannungsschwankungen zu glätten, um eine «saubere» Ausgangsspannung VA bereitzustellen.

Vorzugsweise kommt bei allen Ausführungsformen ein DC/DC-Wandler 32 zum Einsatz, der auch für eine Begrenzung des Stromes (z.B. auf 2A) auf der Ausgangsseite des Wandlers 32 sorgt. Vorzugsweise kommt bei allen Ausführungsformen ein geschalteter DC/DC-Wandler 32 zum Einsatz, der ausgangsseitig eine geglättete Ausgangsspannung VA1 bereitstellt, die an die Bleisäure-Endladespannung der Akkus 10 angepasst ist (z.B. auf 14,4V bei Bleiakkumulatoren 10). Vorzugsweise kommt bei allen Ausführungsformen ein geschalteter DC/DC-Wandler 32 zum Einsatz, der ausgangsseitig gegen Rückstrom gesichert ist (z.B. mit einer Rückstromsperre mit Dioden und/oder MOSFETs, oder mit einem Lastschalter), damit keine Ströme von den Bleiakkumulatoren 10 zurück in den DC/DC-Wandler 32 fliessen.

Ausgangsseitig kann optional zwischen dem Gleichrichter 31 und den Eingängen DC1, DC2 des DC/DC-Wandlers 32 ein Filter 39 angeordnet sein, um störende Frequenzanteile herauszufiltern. Dieser Filter 39 kann pro Eingang DC1 und DC2 zum Beispiel eine Induktivität mit einigen Mikrohenry (μH) aufweisen, wobei je eine Induktivität im Signalpfad zwischen dem positiven Ausgang + des Gleichrichters 31 und dem Eingang DC1 und eine Induktivität im Signalpfad zwischen dem negativen Ausgang - des Gleichrichters 31 und dem Eingang DC2 liegt. Bewährt haben sich zwei identische Spulen mit einer Induktivität zwischen 5 und 10 μH. In Fig. 5A ist dieser Filter 39 strichliert dargestellt, da er optional ist.

Zwischen dem Filter 39 und dem DC/DC-Wandler 32 können bei allen Ausführungsformen weitere Bauteile/-Komponenten (z.B. eine bidirektionale Entstörerdiode) angeordnet sein, um die Gleichspannung AC weiter zu glätten.

Das Spannungspotential, das am Eingang DC2 anliegt, kann bei allen Ausführungsformen auch als Masse (hier als GND PS bezeichnet) für nachfolgende Bauteile/Komponenten weitergeführt werden, wie in Fig. 5B und 5C schematisch angedeutet.

Statt des erwähnten DC/DC-Wandlers 32, kann bei allen Ausführungsformen auch ein geschalteten Spannungsregler(-chip) 40 eingesetzt werden, wie in Fig. 5B und Fig. 5C schematisch angedeutet. Der Spannungsregler(-chip) 40 ersetzt im Schaltbild der Fig. 5A den DC/DC-Wandler 32 und wird eingangsseitig durch die Spannung VA gespeist und stellt ausgangsseitig eine stabilisierte und geregelte Ausgangsspannung VA1 zur Verfügung, wobei diese Ausgangsspannung VA1 zwischen dem positiven Kontakt K1 und der Masse GND PS anliegt. Der negative Kontakt K2 entfällt bei dieser Ausführungsform.

Die Schaltung 30 kann bei allen Ausführungsformen einen Spannungsregler 40 umfassen, um aus der Spannung VA eine geglättete Gleichspannung VA1 mit einer geringen Spannungstoleranz von ±2% und einem hohen Strom (im Bereich mehrerer A) zu erzeugen.

Die Schaltung 30 kann bei allen Ausführungsformen einen aktiven Spannungsregler 40 mit mehreren MOSFETs umfassen, der den Gleichrichter 31 ersetzt und eine geglättete Gleichspannung VA1 mit einer geringen Spannungstoleranz von ±2% und einem hohen Strom (im Bereich mehrerer A) bereitstellt.

Vorzugsweise kommt bei denjenigen Ausführungsformen, die einen DC/DC-Wandler 32 umfassen, ein geschalteter DC/DC-Wandler 32 zum Einsatz, der ausgangsseitig so ausgelegt ist, dass bei einer Ausgangsspannung VA1, die höher ist als die Eingangsspannung VA, das Rückwärtsfliessen einen Stromes durch den DC/DC-Wandler 32 verhindert wird. Dieser Sonderfall kann z.B. bei verpolten Bleiakkumulatoren 10 auftreten.

Vorzugsweise kommt bei denjenigen Ausführungsformen, die einen DC/DC-Wandler 32 umfassen, ein geschalteter DC/DC-Wandler 32 zum Einsatz, der als Abwärtswandler ausgelegt ist. Bei einem solchen Abwärtswandler ist die Spannung VA am Eingang grösser als die Spannung VA1 am Ausgang.

Es kann bei allen Ausführungsformen eine Spannungsverarbeitungsschaltung 41 (siehe Fig. 5A) oder 42 (siehe Fig. 5B, 5C) zum Einsatz kommen, die ausgangsseitig vom DC/DC-Wandler 32 respektive ausgangsseitig vom Spannungsregler 40 angeordnet ist. Diese Spannungsverarbeitungsschaltung 41 oder 42 kann beispielsweise eine Schottkydiode umfassen, die zwischen den Kontakten K1 und K2 oder zwischen dem Kontakt K1 und der Masse GND PS liegt. Optional können der Schottkydiode eine Induktivität im positiven Spannungspfad und eine Parallelschaltung von Kapazitäten zwischen K1, K2 oder K1 und GND PS folgen. Hinter der Parallelschaltung von Kapazitäten kann eine weitere Schottkydiode im positiven Spannungspfad liegen.

Alle Vorrichtung 100 können eine Spannungsverarbeitungsschaltung 41 umfassen, die dem DC/DC-Wandler 32 nachgeschaltet ist. Die Spannungsverarbeitungsschaltung 41 oder 42 kann als Rückspeisungsschutz ausgelegt sein, damit keiner der n Bleiakkumulatoren 10 die HF-Schaltung oder HF-Einspeisung 33 (rück-)speist und/oder damit keiner der n Bleiakkumulatoren 10 entladen wird, falls zum Beispiel die primäre Spannungsversorgung nicht angeschlossen ein sollte, oder falls diese ausgefallen sein sollte.

Vorzugsweise umfassen alle Ausführungsformen zusätzlich eine HF-Schaltung oder eine HF-Einspeisung, die in Fig. 5A, 5B, 5C durch einen Block 33 symbolisiert ist. Die Auslegung dieses Blocks 33 ist kritisch, da die zu ladenden und zu konditionierenden Akkus 10 relativ niederohmig sind und da der Innenwiderstand (Batterie-Impedanz) dieser Akkus 10 sich je nach Zustand des jeweiligen Akkus 10 verändern kann. Ausserdem muss die HF-Schaltung oder eine HF-Einspeisung so ausgelegt sein, dass sie keine störende Rückwirkung auf die Schaltungen 41, 32 bzw. 42, 40 hat.

Die Batterie-Impedanz der Akkus 10 liegt beispielsweise bei ca. 30 Ohm. In diesem Fall ist die HF-Schaltung oder HF-Einspeisung 33 so ausgelegt, dass der geregelten Spannung VA1 (respektive dem geregelten Ladestrom IL) eine HF-Spannung, respektive ein HF-Strom IHF eingeprägt wird, der größer ist als 75 mA. In Fig. 5A, 5B ist dieser HF-Strom IHF als Strom dargestellt, der von aussen vorgegeben wird. Diese Darstellung ist jedoch nur symbolhaft zu verstehen. Die HF-Spannung oder der HF-Strom IHF kann z.B. auch innerhalb des Blocks 33 erzeugt oder vorgegeben werden. In Fig. 5C werden die hochfrequenten Signale mit HF1, HF2 bezeichnet.

Fig. 5C zeigt schematisch Details einer bevorzugten Vorrichtung 100 der Erfindung, die als Abwandlung/Variante der Schaltung der Fig. 5B zu verstehen ist, wobei hier m=n=4 Kanäle zum Laden und Konditionieren von n=4 Akkumulatoren 10 vorgesehen sind. Die in Fig. 5C gezeigte Vorrichtung 100 hat vier parallel angeordnete Kanäle zum Laden von n=4 Bleiakkumulatoren 10 (Akkumulatoren-Anordnung 120 wie z.B. im oberen Bereich der Fig. 3 gezeigt). Jeder Kanal kann identisch ausgeführt sein und kann bei allen Ausführungsformen zum Beispiel je eine Ladeschaltung 30 der Fig. 5B umfassen. Kundenseitig oder auf seiten des Anwenders wird ein Transformator 110 bereitgestellt, der hier 4 unabhängige Wechselspannungen VE~ bereitstellt. Die Ladeschaltungen 30 erzeugen aus den Wechselspannungen VE~ für jeden der n=4 Bleiakkumulatoren 10 einen situativ angepassten Ladestrom IL1, IL2, IL3, IL4, die über die paarweise vorhandenen Lade-Verbindungen L1.1, L1.2, L2.1, L2.2, L3.1, L3.2, L4.1, L4.2 den Akkus 10.1, 10.2, 10.3 und 10.4 zugeführt werden.

Die Leitungspaare L1.1, L1.2 werden jeweils an den Minuspol 2 und den Pluspol 1 des ersten Akkus 10.1 angeschlossen. Die Leitungspaare L2.1, L2.2 werden jeweils an den Minuspol 2 und den Pluspol 1 des zweiten Akkus 10.2 angeschlossen, usw.

Es kommt bei allen Ausführungsformen mindestens ein Block 33 zum Einsatz, der ausgangsseitig Ladeströme IL1, IL2, IL3, IL4 mit überlagerten Hochfrequenzsignale HF1, HF2 bereitstellt. Zwischen der Ausgangsseite A des Blocks 33 und den Einkoppelpunkten auf der oberen Ausgangsseite der Schaltungen 44 der Fig. 5C können abgeschirmte Kabel vorgesehen sein, um die Hochfrequenzsignale HF1, HF2 gegen Störungen zu schützen.

Auch die Lade-Leitungen sollten vorzugsweise bei allen Ausführungsformen mittels abgeschirmte Kabel ausgeführt sein.

Es können bei allen Ausführungsformen zwischen den Ladeschaltungen 30 und den genannten Einkoppelpunkten Anpassungsschaltungen oder Entkopplungsschaltungen 44 angeordnet sein, wie in Fig. 5C angedeutet. Diese Schaltungen 44 umfassen vorzugsweise bei allen Ausführungsformen im positiven Signalpfad und im negativen Signalpfad je mindestens eine Induktivität. Der positive Signalpfad speist den Pluspol 1 des Akkus 10 und der negative Signalpfad speist den Minuspol 2 des Akkus 10. Jede dieser Induktivitäten kann einen Wert im Bereich zwischen 100 und 500 $\mu$H aufweisen. Zwischen den beiden Signalpfaden kann vor den genannten Induktivitäten eine Kapazität angeordnet sein, die eine Kapazität zwischen 100 und 500 nF aufweist.

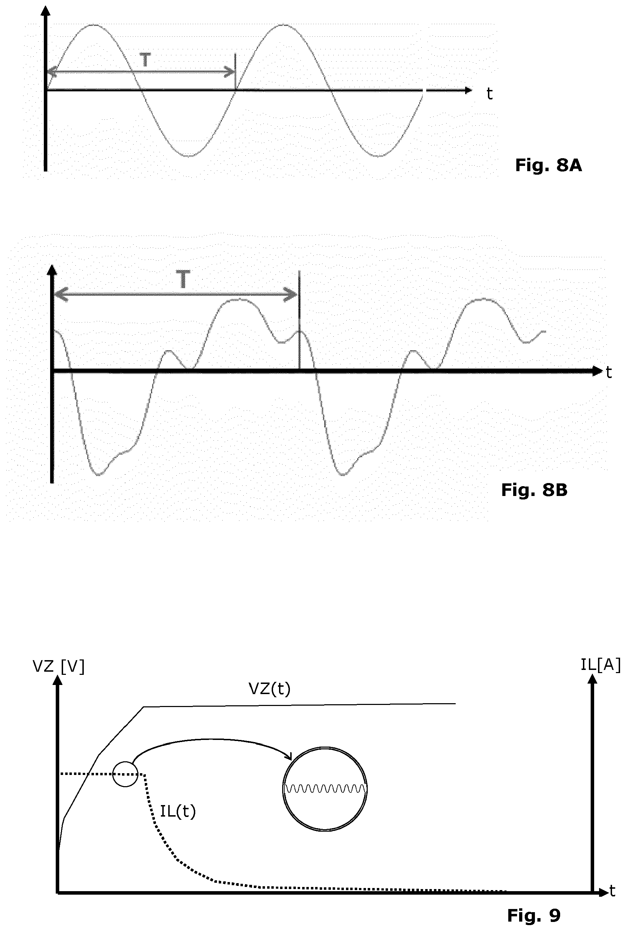

Als HF-Spannung IHF wird hier eine Spannung und als HF-Strom IHF wird hier ein Strom bezeichnet, die/der eine periodische (z.B. sinusartige) Signalform aufweist und deren/dessen Frequenz fI im MHz-Bereich liegt. Als periodische Signalform gelten auch Signale, die einen periodischen Anteil enthalten (siehe Fig. 8B).

Vorzugsweise beträgt die Frequenz fI bei allen Ausführungsformen 3 MHz oder mehr als 3 MHz. Besonders bevorzugt sind Ausführungsformen, bei denen die Frequenz fI kleiner ist als 10 MHz. Besonders bevorzugt sind Ausführungsformen, bei denen die Frequenz fI zwischen 3 MHz und 4 MHz beträgt, um die Redox-Reaktion anzuregen, die in den Bleiakkumulatoren 10 abläuft. Durch dieser Frequenzanregung der Redox-Reaktion wird möglichst alles Bleisulfat, das sich beim Entladen bildet, zurückgebildet. Ganz besonders bewährt hat sich eine Frequenz fI, die ca. 3,2MHz $\pm$5% beträgt.

In Fig. 5A, 5B ist beispielhaft die sinusartige Signalform (siehe auch Fig. 8A) links neben dem Block 33 dargestellt.

In Fig. 5A sind beispielhaft die beiden Lade-Leitungen Ln+1 und Ln+2 dargestellt, die dem in Fig. 2 ganz rechts gezeigten nten Akku 10 zugeordnet sind. Diese Bezeichnung der Leitungen ist nur als Beispiel zu verstehen. Wenn die Schaltung 30 z.B. eine Akku-Reihenschaltung 120 nach Fig. 3 laden und konditionieren soll, so wären die beiden Ausgänge auf der Ausgangsseite A z.B. mit L4.1, L4.2 bezeichnet, um den in Fig. 3 ganz rechts gezeigten 4. Akku 10 zu speisen.

Die Teilvorrichtung 20 kann bei allen Ausführungsformen eine galvanische Trennung umfassen, respektive kann eine Vorrichtung zur galvanischen Trennung als Teil der Teilvorrichtung 20 vorgesehen sein. Diese galvanische Trennung kann bei allen Ausführungsformen aber auch kundenseitig z.B. durch den Transformator 110 sichergestellt werden (induktive, eingangsseitige Trennung genannt) und/oder es kann bei allen Ausführungsformen optional ein Leistungsmodul zwischen der Eingangsseite E und den Akkus 10 vorgesehen sein, das für eine galvanische Trennung sorgt. Ein solches Leistungsmodul kann z.B. in m-facher Ausführung auf der Eingangsseite E der Lastanpassungsschaltungen 30 oder z.B. in m-facher Ausführung zwischen den Gleichrichtern 31 und den DC/DC-Wandlern 32 vorgesehen sein.

Ein solches Leistungsmodul kann bei allen Ausführungsformen für jeden der m-Kanäle einen AC/DC-Wandler umfassen, der eine höhere Wechselspannung (z.B. 230V) in eine niedrigere Gleichspannung (z.B. 24V) umwandelt und dabei gleichzeitig für die galvanische Trennung sorgt. Diese niedrigere Gleichspannung kann dann z.B. über Leitungen (z.B. als Teil einer Platine oder einer Backplane) an alle m Lastanpassungsschaltungen 30 übergeben werden.

Ein solches Leistungsmodul kann bei allen Ausführungsformen eine DC Einspeisung über dieselben Eingänge vornehmen, wie die AC Einspeisung, da es sich bei den Gleichrichtern um aktive Brücken handelt, die bei einer Gleichstromeinspeisung keine oder nur sehr geringe Verluste verursachen.

Bei allen Ausführungsformen stellt der Block 21 an Ausgangsleitungen (L2, L3, ..., Ln+1), z.B. an den Kontakten 6, situativ angepasste Ladeströme IL (respektive IL1 - ILn) für jeden der n Akkus 10 bereit, wobei diesen Ladeströmen IL ein periodisches Hochfrequenzsignal überlagert ist, wie erwähnt. Es handelt sich bei den Ladeströmen IL somit jeweils um einen Gleichstrom mit überlagertem hochfrequentem sinusförmigem Signalanteil. In Fig. 9 ist in stark vereinfachter Form dargestellt, dass die Amplitude des überlagerten hochfrequenten sinusförmigem Signalanteils sehr klein ist. Daher wird in Fig. 9 mit einer Art Lupe ein Ausschnitt des Ladestromes IL vergrössert gezeigt.

Fig. 8A zeigt schematisch den Kurvenverlauf eines periodischen, sinusförmigen Signals und Fig. 8B zeigt schematisch den Kurvenverlauf eines Signals, das einen periodischen Signalanteil umfasst. Die jeweilige Periodenlänge ist mit T bezeichnet, t steht für die Zeitachse und die zweite Achse zeigt den Verlauf der Spannungs- oder Stromamplitude. Die periodischen Signale, die sich zum Zwecke der Erfindung eignen, haben einen harmonischen, unterbrechungsfreien Kurvenverlauf.

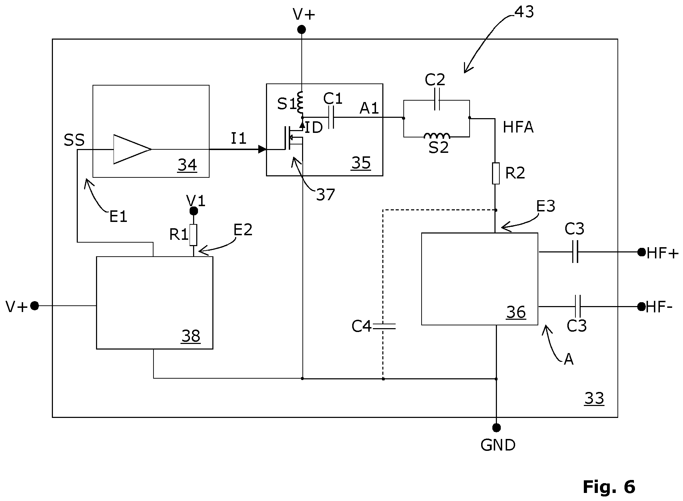

In Fig. 6 ist beispielhaft das Schaltbild des HF-Blocks 33 in schematisierter Form dargestellt. Der Block 33 kann beispielweise eine Mikrochip-Schaltung 34 umfassen, die als Treiberschaltung mit einem oder mehreren Operationsverstärkern dient. Diese Mikrochip-Schaltung 34 wird auf der linken Seite (Eingangsseite E1) mit einem präzisen sinusförmigen Schwingungssignal SS gespeist und stellt einen periodischen (hier sinusförmigen) Ausgangsstrom I1 bereit, der bei allen Ausführungsformen größer als 1A sein sollte (vorzugsweise beträgt I1=3A). Die Mikrochip-Schaltung 34 wird gefolgt von einer MOSFET-Schaltung 35 (d.h., die Mikrochip-Schaltung 34 speist die MOSFET-Schaltung 35), die als zentrales Bauteil mindestens einen MOSFET 37 umfasst, der auf der einen Seite (am Drain-Kontakt) über eine Induktivität S1 mit einer Versorgungsspannung V+ und auf der anderen Seite (d.h. am Source-Kontakt) mit Masse (GND oder GND PS) verbunden ist.

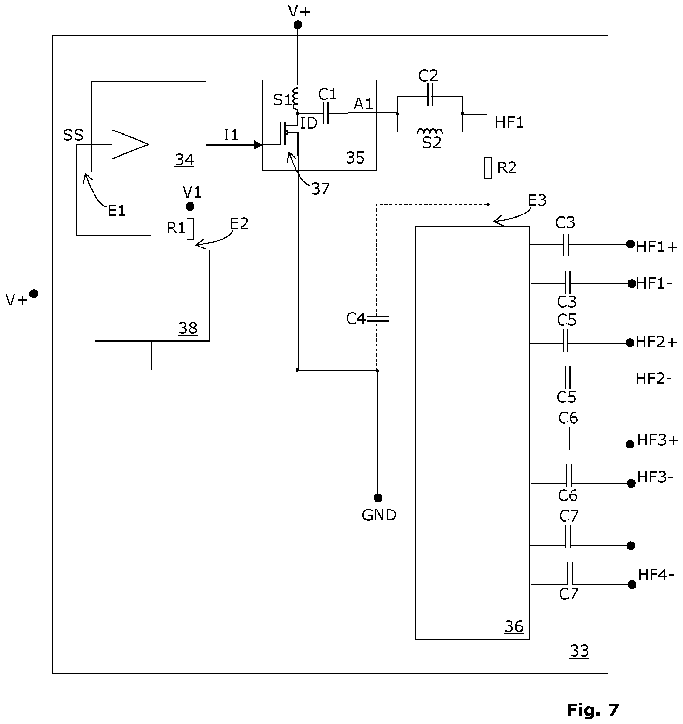

In Fig. 7 ist beispielhaft das Schaltbild eines weiteren möglichen HF-Blocks 33 in schematisierter Form dargestellt. Es wird hier auch auf die Beschreibung der Fig. 6 verwiesen. Die Elemente/Komponenten 34, 35 und 38 sind so aufgebaut wie in Fig. 6 gezeigt.

In Fig. 6 und 7 sind Anordnungen mit je einem n-Kanal MOSFET 37 gezeigt. Dieser n-Kanal MOSFET 37 sollte dazu ausgelegt sein einen Drainstrom ID von mindestens 1A, vorzugsweise von mindestens 1,5A abzugeben. Der n-Kanal MOSFET 37 wird am Gate-Kontakt mit dem periodischen Ausgangsstrom I1 gespeist und sollte als schnellschaltender MOSFET ausgelegt sein.

Vorzugsweise wird der n-Kanal MOSFET 37 bei allen Ausführungsformen am Drain-Kontakt mit einer Reihenschaltung aus einem Widerstand und einer Kapazität in bekannter Art und Weise gegen Masse (GND) verbunden (nicht in Fig. 6 und 7 gezeigt), um am Drain-Kontakt eine geeignete Spannung vorzugeben.

Ausgangsseitig (d.h. am Drain) wird ein periodisches (hier sinusförmiges) Ausgangssignal A1 mittels einer Kapazität C1 ausgekoppelt. Ausgangsseitig speist die MOSFET-Schaltung 35 mit dem Ausgangssignal A1 einen Schwingkreis 43, der mindestens eine Induktivität L2 und eine Kapazität C2 in Parallelschaltung umfasst, wie in Fig. 6 angedeutet. Dieser Schwingkreis 38 erzeugt ein hochfrequentes Sinussignal HFA, das einer Widerstands-Teilerschaltung 36 zugeführt wird. Auf der Ausgangsseite A der Widerstands-Teilerschaltung 36 werden zwei hochfrequente, sinusförmige Signale HF+ und HF- ausgekoppelt. Hier kommen zwei identische Kapazitäten C3 zum Einsatz, die im jeweiligen Signalpfad liegen, um den Block 33 von den nachfolgenden Schaltungen und/oder von den Akkus 10 zu entkoppeln.

Das präzise periodische (z.B. sinusförmige) Schwingungssignal SS kann bei allen Ausführungsformen z.B. durch einen Oszillator 38 bereitgestellt werden. Der Oszillator 38 kann beispielsweise einen Oszillatorchip umfassen, dessen Schwingungsfrequenz durch einen externen Widerstand R1 programmiert bzw. vorgegeben werden kann. In Fig. 6 wird die Versorgungsspannung V1 durch den Widerstand R1 so heruntergeteilt, dass an dem Eingang E2 eine Gleichspannung anliegt, welche die Schwingungsfrequenz z.B. auf 3 MHz festlegt. V1 kann z.B. 5V betragen.

Der Oszillator 38 sollte so gewählt werden, dass er bei allen Ausführungsformen im MHz-Bereich eine Frequenzungenauigkeit von weniger als 1% aufweist.

Optional kann zwischen der Ausgangsseite des Schwingkreises 38 und der Eingangsseite E3 der Widerstands-Teilerschaltung 36 bei allen Ausführungsformen ein Widerstand R2 vorgesehen sein, um die Spannung des Schwingkreises 38 an die Eingangsspannung der Widerstands-Teilerschaltung 36 anzupassen. Die Vorrichtung 33 der Fig. 6 stellt ein hochfrequentes Signal HF+, HF- an der Ausgangsseite A zur Verfügung, wobei dieses Signal in alle Lade-Leitungen eingeprägt wird, die zu den Akkus 10 führen. Fig. 7 stellt pro Akku 10 ein hochfrequentes Signal HF1+, HF1- bis HF4+, HF4- an der Ausgangsseite A zur Verfügung. Jedes dieser Signale wird in die zugehörige Lade-Leitungen eingeprägt, die paarweise zu den Akkus 10.1 bis 10.4 führen. Entsprechend ist Widerstands-Teilerschaltung 36 der Fig. 7 etwas anders aufgebaut als die Widerstands-Teilerschaltung 36 der Fig. 6.

Optional kann die Eingangsseite E3 der Widerstands-Teilerschaltung 36 bei allen Ausführungsformen durch eine Kapazität C4 gegen Masse (GND oder GND PS) verbunden sein. Die entsprechende Leitung/Leiterbahn ist in Fig. 6 strichliert dargestellt.

Bei allen Ausführungsformen kann auf der Ausgangsseite A der HF-Schaltung oder HF-Einspeisung 33 ein frequenzangepasster Ferrit-RingkernTransformator eingesetzt werden, um kapazitiv kontaktlos das hochfrequente Signal dem Ladestrom einzuprägen.

Bei allen Ausführungsformen kann auf der Ausgangsseite A der HF-Schaltung oder HF-Einspeisung 33 eine induktive, kontaktlose Einspeisung des hochfrequenten Signals erfolgen.

Bei allen Ausführungsformen kann auf der Eingangsseite E der Lastanpassungsschaltungen 30 (siehe Fig. 5A, 5B, 5C) ein Mehrabgangstransformator (z.B. ein leistungsfähiger Ringkerntransformator) eingesetzt werden, der an jedem Abgang pro zu ladendem Akku 10 eine separate Wechselspannung VE~ bereitstellt. Fig. 5C zeigt ein entsprechendes Beispiel.

Bei allen Ausführungsformen kann die Vorrichtung 100 für jeden Akku 10 einen eigenen Strombegrenzer umfassen, der den Ladestrom IL z.B. auf 2A beschränkt.

Bei allen Ausführungsformen kann die Vorrichtung 100 für jeden Akku 10 eine eigene Spannungsbegrenzung vorsehen, welche die maximale Ladespannung z.B. auf 13,8V beschränkt.

Die Vorrichtung 100 kann bei allen Ausführungsformen so ausgelegt sein, dass sie mit einer Wechselspannung VE~ im Bereich zwischen 18V und 30V gespeist werden kann.

Bezugszeichen:

| | |
|---|---|
| Elektrode / Anode/ Anodenplatte | 1 |
| Elektrode / Kathode/ Kathodenplatte | 2 |
| Elektrolyt | 3 |
| (Ausgangs-)Kontakte | 4 |
| (Eingangs-)Kontakte | 5 |
| Reihe von Kontakten | 6 |
| Separator | 7 |
| | |
| Bleiakkumulatoren | 10; 10.1, 10.2 ... 10.n |
| | |
| Teilvorrichtung/Baugruppe | 20 |
| Vorrichtung / Block | 21 |
| Vorrichtung zur galvanischen Trennung | 22 |
| | |
| Ladeschaltungen | 30 |
| Gleichrichter | 31 |
| DC/DC Wandler | 32 |
| HF-Schaltunq oder Einspeisung | 33 |
| Mikrochip-Schaltung | 34 |
| MOSFET-Schaltung | 35 |
| Impedanzanpassung | 36 |
| MOSFET | 37 |
| Oszillator | 38 |
| Filter | 39 |
| Spannungsregler(-chip) | 40 |
| Spannunqsverarbeitunqsschaltung | 41, 42 |
| Schwingkreis | 43 |
| Anpassungsschaltung /Entkopplungsschaltung | 44 |
| | |
| Vorrichtung | 100 |
| | |
| Transformator | 110 |
| | |
| Akkumulatoren-Anordnunq | 120 |

(fortgesetzt)

| | |
|---|---|
| USV-Schaltunq | 120 |
| | |
| Speichervorrichtung | 200 |
| | |
| Ausqanqsseite | A |
| Ausqanqssiqnal | A1 |
| Anschlüsse / Kontakte | AC1, AC2 |
| Kapazitäten | C1, C2, C3, C4 |
| Anschlüsse / Kontakte | DC1, DC2 |

| | |
|---|---|
| Einqanqsseite | E, E1, E2, E3 |
| Frequenz | fl |
| Erdunq / Masse | GND |
| HF-Signal | HFA, HF+, HF- |
| Strom | I |
| Drainstrom | ID |
| Ausqanqsstrom | I1 |
| Ladestrom | IL |
| Kontakte | K1, K2 |
| Ladestrom | IL1, IL2, IL3, IL4, ILn |
| (Lade-)Leitungen / (Lade-) Verbindungen | L1, L2, L3, ... |
| Paarweise Leitungen / Verbindungen | L1.1, L1.2; L2.1, L2.2;, L3.1, L3.2; L4.1, L4.2 |
| (Last-)Widerstand | R |
| Widerstand | R1, R2 |
| Spannungsquelle | SQ |
| Induktivitäten / Spulen | S1, S2 |
| Schwinqunqssiqnal | SS |
| Periodenlänqe | T |
| Zeit | t |
| unterbrechungsfreie Spannungs- oder Stromversorgung / Block / Schaltung | USV |
| Gleichspannung | V+ |
| Nennspannung | VG |
| Gesamtspannung | VGS |
| Versorgungsspannung | V1 |
| Wechselspannung | V~ |
| Ausgangsspannung | VA |
| Ausgangsspannung | VA1 |
| Eingangsspannung | VE~ |

(fortgesetzt)

| Zellspannung | VZ |
|---|---|

**Patentansprüche**

1. Vorrichtung (100), die zum zeitgleichen Laden von n wiederaufladbaren Bleiakkumulatoren (10; 10.1, 10.2 ... 10.n) ausgelegt ist, wobei

   • n eine ganze Zahl größer gleich 2 ist,
   • die n Bleiakkumulatoren (10) in Reihe geschaltet sind,
   • jeder der n Bleiakkumulatoren (10) eine identische Anzahl von elektrochemischen Akkuzellen umfasst,

   **dadurch gekennzeichnet, dass** die Vorrichtung (100) umfasst:

   • eine Vorrichtung (21) mit m Lastanpassungsschaltungen (30), wobei m eine ganze Zahl kleiner gleich n ist, und wobei die m Lastanpassungsschaltungen (30) n separate Ladeströme (IL; IL1, IL2 ... ILn) bereitstellen, wobei jeder der m Lastanpassungsschaltungen (30) über eine elektrisch leitende Verbindung mit dem Pluspol (1) und über eine elektrisch leitende Verbindung mit dem Minuspol (2) einer der n Bleiakkumulatoren (10; 10.1, 10.2 ... 10.n) so verbunden ist, dass jeder der n Bleiakkumulatoren (10; 10.1, 10.2 ... 10.n) individuell mit einem der n separaten Ladeströme (IL; IL1, IL2 ... ILn) geladen werden kann,
   • eine HF-Schaltung oder HF-Einspeisung (33), die ein hochfrequentes, periodisches Signal (HF1, HF2; IHF) bereitstellt, das jedem der n separaten Ladeströme (IL; IL1, IL2 ... ILn) aufgeprägt wird, um jeden der n Bleiakkumulatoren (10; 10.1, 10.2 ... 10.n) separat im Hochfrequenzbereich zu konditionieren.

2. Vorrichtung (100) nach Anspruch 1, **dadurch gekennzeichnet, dass** die Bedingung n=m erfüllt ist und dass jeder der n Bleiakkumulatoren (10; 10.1, 10.2 ... 10.n) über zwei elektrisch leitende Verbindungen mit einer zugeordneten Lastanpassungsschaltung (30) verbunden ist.

3. Vorrichtung (100) nach Anspruch 1, **dadurch gekennzeichnet, dass** n eine gerade Zahl größer gleich 2 und n=2*m, wobei jeder der m Lastanpassungsschaltungen (30) zwei Bleiakkumulatoren (10; 10.1, 10.2 ... 10.n) mit Ladeströmen (IL; IL1, IL2 ... ILn) speist.

4. Vorrichtung (100) nach einem der Ansprüche 1 bis 3, **dadurch gekennzeichnet, dass** die m Lastanpassungsschaltungen (30) zu einer Vorrichtung (21) zusammengefasst sind, die durch eine Vorrichtung zur galvanischen Trennung (22) von einem Transformator (110) getrennt sind, der zur Wechselspannungsversorgung der m Lastanpassungsschaltungen (30) dient.

5. Vorrichtung (100) nach einem der Ansprüche 1 bis 3, **dadurch gekennzeichnet, dass** sie einen Transformator (110) umfasst oder mit einem Transformator (110) verbindbar ist, der zur Wechselspannungsversorgung der m Lastanpassungsschaltungen (30) dient und der als galvanischen Trennung zu einem Versorgungsnetz (V~) dient.

6. Vorrichtung (100) nach einem der Ansprüche 1 bis 5, **dadurch gekennzeichnet, dass** jede der m Lastanpassungsschaltungen (30) auf der Eingangsseite (E) einen Gleichrichter (31) und einen DC/DC-Wandler (32) umfasst, wobei der Gleichrichter (31) eine erste Gleichspannung (VA) bereitstellt, die vom DC/DC-Wandler (32) in einer niedrigere Gleichspannung (VA1) und einen Ladestrom (IL; IL1, IL2 ... ILn) bereitstellt, um einen oder mehr als einen der n Bleiakkumulatoren (10; 10.1, 10.2 ... 10.n) laden zu können.

7. Vorrichtung (100) nach Anspruch 6, **dadurch gekennzeichnet, dass** zwischen dem Gleichrichter (31) und dem DC/DC-Wandler (32) ein Filter (39) angeordnet ist, um störende Frequenzanteile der herauszufiltern.

8. Vorrichtung (100) nach Anspruch 6 oder 7, **dadurch gekennzeichnet, dass** dem DC/DC-Wandler (32) eine Spannungsverarbeitungsschaltung (41; 42) nachgeschaltet ist, die als Rückspeisungsschutz ausgelegt ist, damit keiner der n Bleiakkumulatoren (10) die HF-Schaltung oder HF-Einspeisung (33) speist und/oder damit keiner der n Bleiakkumulatoren (10) entladen wird.

9. Vorrichtung (100) nach einem der Ansprüche 1 bis 8, **dadurch gekennzeichnet, dass** das hochfrequente, periodische Signal (HF1, HF2; IHF) jedem der n separaten Ladeströme (IL; IL1, IL2 ... IIn) kapazitiv oder induktiv aufgeprägt wird.

10. Vorrichtung (100) nach einem der Ansprüche 1 bis 8, **dadurch gekennzeichnet, dass** sie Anpassungsschaltungen oder Entkopplungsschaltungen (44) umfasst, um das hochfrequente, periodische Signal (HF1, HF2; IHF) jedem der n separaten Ladeströme (IL; IL1, IL2 ... IIn) aufzuprägen.

11. Vorrichtung (100) nach einem der Ansprüche 9 oder 10, **dadurch gekennzeichnet, dass** das hochfrequente, periodische Signal (HF1, HF2; IHF) eine Frequenz (fl) aufweist, die grösser ist als 3MHZ und kleiner als 10MHz, wobei diese Frequenz (fl) vorzugsweise zwischen 3MHz und 4 MHz beträgt.

12. Speichervorrichtung (200), die eine Vorrichtung (100) nach einem der Ansprüche 1 bis 11 und eine Serienschaltung (120) von n baugleichen Bleiakkumulatoren (10) umfasst, wobei die n baugleichen Bleiakkumulatoren (10) durch die Vorrichtung (100) ladbar und gleichzeitig konditionierbar ist.

13. Verfahren zum zeitgleichen Laden von n wiederaufladbaren Bleiakkumulatoren (10; 10.1, 10.2 ... 10.n), wobei

• n eine ganze Zahl größer gleich 2 ist,
• die n Bleiakkumulatoren (10) in Reihe geschaltet sind, und
• jeder der n Bleiakkumulatoren (10) eine identische Anzahl von elektrochemischen Akkuzellen umfasst,

umfassend die Schritte:

- Bereitstellen von n separaten Ladeströme (IL; IL1, IL2 ... IIn) so, dass jeder der n Bleiakkumulatoren (10; 10.1, 10.2 ... 10.n) individuell mit einem der n separaten Ladeströme (IL; IL1, IL2 ... IIn) geladen wird,
- Bereitstellen eines hochfrequenten, periodischen Signals (HF1, HF2; IHF),
- Aufprägen des hochfrequenten, periodischen Signals (HF1, HF2; IHF) auf jeden der n separaten Ladeströme (IL; IL1, IL2 ... IIn), um jeden der n Bleiakkumulatoren (10; 10.1, 10.2 ... 10.n) separat im Hochfrequenzbereich zu konditionieren, wobei das hochfrequente, periodische Signal (HF1, HF2; IHF) eine Frequenz (fl) aufweist, die grösser ist als 3MHZ und kleiner als 10MHz, und wobei diese Frequenz (fl) vorzugsweise zwischen 3MHz und 4 MHz beträgt.

**Fig. 1A**

**Fig. 1B**

**Fig. 2**

**Fig. 3**

**Fig. 4**

Fig. 5A

Fig. 5B

**Fig. 5C**

Fig. 6

Fig. 7

**Fig. 8A**

**Fig. 8B**

**Fig. 9**

EUROPÄISCHER RECHERCHENBERICHT

Nummer der Anmeldung

EP 24 18 8041

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 6 100 663 A (BOYS JOHN TALBOT [NZ] ET AL) 8. August 2000 (2000-08-08) * Spalten 1,2,6,7; Abbildung 3 * ----- | 1-13 | INV. H02J7/00 |
| Y | US 2003/117109 A1 (TREPKA RON [US]) 26. Juni 2003 (2003-06-26) * Absätze [0001] - [0011]; Abbildung 1 * ----- | 1-13 | |
| Y | CN 116 885 825 A (ZHANG JIRONG) 13. Oktober 2023 (2023-10-13) * Seite 3 * ----- | 1-13 | |
| Y | US 2023/359231 A1 (RASTEGAR JAHANGIR S [US]) 9. November 2023 (2023-11-09) * Absatz [0027] * ----- | 11 | |

RECHERCHIERTE SACHGEBIETE (IPC)

H02J

Der vorliegende Recherchenbericht wurde für alle Patentansprüche erstellt

| Recherchenort | Abschlußdatum der Recherche | Prüfer |
|---|---|---|
| München | 3. Dezember 2024 | Ramcke, Ties |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 18 8041

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-12-2024

| Im Recherchenbericht angeführtes Patentdokument | Datum der Veröffentlichung | Mitglied(er) der Patentfamilie | Datum der Veröffentlichung |
|---|---|---|---|
| US 6100663 A | 08-08-2000 | AU 716214 B2 | 24-02-2000 |
| | | CA 2252224 A1 | 13-11-1997 |
| | | EP 0896758 A1 | 17-02-1999 |
| | | JP 2000509955 A | 02-08-2000 |
| | | US 6100663 A | 08-08-2000 |
| | | WO 9742695 A1 | 13-11-1997 |
| US 2003117109 A1 | 26-06-2003 | KEINE | |
| CN 116885825 A | 13-10-2023 | KEINE | |
| US 2023359231 A1 | 09-11-2023 | EP 4162580 A1 | 12-04-2023 |
| | | EP 4258422 A2 | 11-10-2023 |
| | | JP 2023541386 A | 02-10-2023 |
| | | KR 20230070254 A | 22-05-2023 |
| | | US 2022113750 A1 | 14-04-2022 |
| | | US 2023359231 A1 | 09-11-2023 |
| | | WO 2022053681 A1 | 17-03-2022 |

EPO FORM P0461

Für nähere Einzelheiten zu diesem Anhang : siehe Amtsblatt des Europäischen Patentamts, Nr.12/82